# EUROPÄISCHE PATENTSCHRIFT

(11) **EP 0 671 027 B1**
(45) Veröffentlichungstag und Bekanntmachung des Hinweises auf die Patenterteilung: **05.02.1997**
(21) Anmeldenummer: 93923446.4
(22) Anmeldetag: 22.10.1993
(51) Int. Cl.: G05B 19/042

(54) **VERFAHREN ZUM ERSTELLEN DER ANWENDUNGSABHÄNGIGEN LOGIK EINES FREIPROGRAMMIERBAREN SCHALTWERKES, EINRICHTUNG ZUR DURCHFÜHRUNG DIESES VERFAHRES UND EINRICHTUNG ZUM BETRIEB EINES STEUERUNGSSYSTEMS UNTER VERWENDUNG EINES SO ERSTELLTEN PROGRAMMS**
PROCESS FOR DEFINING THE APPLICATION-DEPENDENT LOGIC OF A FREELY PROGRAMMABLE SEQUENTIAL LOGIC SYSTEM, DEVICE FOR IMPLEMENTING THIS PROCESS AND DEVICE FOR OPERATING A CONTROL SYSTEM USING A PROGRAM THUS DEFINED
PROCEDE ET DISPOSITIF D'ETABLISSEMENT D'UNE LOGIQUE DEPENDANT DE L'APPLICATION DANS UN MECANISME DE COMMUTATION LIBREMENT PROGRAMMABLE A SEQUENCES, ET DISPOSITIF ASSURANT LE FONCTIONNEMENT D'UN SYSTEME DE COMMANDE ET FAISANT APPEL A UN PROGRAMME AINSI ETABLI

(30) Priorität: 25.11.1992 EP 92250346
(43) Veröffentlichungstag der Anmeldung: 13.09.1995
(73) Patentinhaber: SIEMENS AKTIENGESELLSCHAFT, 80333 München (DE)
(72) Erfinder: FILKORN, Thomas, D-80337 München (DE); NÖKEL, Klaus, D-85540 Haar (DE); PETERSEN, Hans-Joachim, D-38350 Helmstedt (DE); PROTZNER, Sven, D-38302 Wolfenbüttel (DE)
(86) Internationale Anmeldenummer: DE9301023
(87) Internationale Veröffentlichungsnummer: WO9412914

(56) Entgegenhaltungen:
- EP-A- 0 435 188
- ATP-SOFTWAREPRAXIS Bd. 32, Nr. 9 , September 1990 , MüNCHEN, DE Seiten 455 - 459 MICHAEL LASKOWSKI & HEINZ UNBEHAUEN 'Problembezogene Synthese von sequentiellen Steuerungsprogrammen'
- ATP AUTOMATISIERUNGSTECHNISCHE PRAXIS Bd. 32, Nr. 10 , Oktober 1990 , MÜNCHEN, DE Seiten 509 - 514 MICHAEL LASKOWSKI & HEINZ UNBEHAUEN 'Problembezogene Synthese von sequentiellen Steuerungsprogrammen'
- VDI-ZEITSCHRIFT Bd. 133, Nr. 12 , Dezember 1991 , DüSSELDORF, DE Seiten 60, 63-65 JÜRGEN SCHMIDT & HANS-JOACHIM SCHELBERG 'Objektorientierte Projektierung von Steuerungssoftware'
- ATP-SOFTWAREPRAXIS vol. 32, Nr. 9 , September 1990 , MüNCHEN, DE Seiten 455 - 459 MICHAEL LASKOWSKI & HEINZ UNBEHAUEN 'Problembezogene Synthese von sequentiellen Steuerungsprogrammen'
- ATP AUTOMATISIERUNGSTECHNISCHE PRAXIS vol. 32, Nr. 10 , Oktober 1990 , MÜNCHEN, DE Seiten 509 - 514 MICHAEL LASKOWSKI & HEINZ UNBEHAUEN 'Problembezogene Synthese von sequentiellen Steuerungsprogrammen'
- VDI-ZEITSCHRIFT vol. 133, Nr. 12 , Dezember 1991 , DüSSELDORF, DE Seiten 60, 63-65 JÜRGEN SCHMIDT & HANS-JOACHIM SCHELBERG 'Objektorientierte Projektierung von Steuerungssoftware'

## Beschreibung

Zur Steuerung und Überwachung auch umfangreicher Prozeßgeschehen werden heute nahezu ausschließlich Rechner oder Rechnersysteme verwendet. So werden z. B. zum Sichern des Bahnverkehrs elektronische Stellwerke eingesetzt, die aus einer Vielzahl von in sich sicheren Rechnersystemen bestehen. Diese Rechner behandeln einzelne Komponenten des Prozeßgeschehens "Bahnanlage" entweder zentral wie z. B. bei der Eingabe von Kommandos und der Ausgabe von Meldungen oder aber dezentral wie z. B. bei der Steuerung des eigentlichen Stellwerksgeschehens. Die letztgenannten Rechner, die sogenannten Bereichsrechner oder Bereichs-Stellrechner, sind bestimmten Teilen der zu steuernden Anlage zugeordnet. Sie beinhalten eine anwenderunabhängige Systemsoftware, d. h. diejenigen Programme, welche die Rechner in die Lage versetzen, als Stellwerk zu arbeiten, und eine bahnverwaltungsspezifische Software, welche die logischen Stellwerks- und Blockbedingungen der jeweiligen Bahnverwaltung beinhaltet; die Systemsoftware und die bahnverwaltungsspezifische Software sind bei allen Bereichsrechnern ein und desselben Stellwerkes gleich. Um die ihnen zugewiesenen Stellwerksfunktionen erfüllen zu können, müssen die Bereichsrechner auch Kenntnis haben von den anlagenspezifischen Daten mindestens derjenigen Fahrwegelemente, die zu dem von ihnen gesteuerten Teilbereich der Anlage gehören. Zu diesen anlagenspezifischen Daten gehören Angaben über die jeweils vorhandenen Fahrwegelemente und ihre Anordnung im Gleis in bezug auf die Nachbarfahrwegelemente. Diese Daten sind bei jedem Bereichsrechner unterschiedlich; sie werden von den Bereichsrechnern in einer Aufrüstphase aus Speichern eines zentralen Rechners individuell abgerufen. Zum Abarbeiten von Stellwerksfunktionen ruft der Bereichsrechner die entsprechenden, in seinem Speicher hinterlegten Unterprogramme z. B. für die Weichenumstellung oder die Flankenschutzsuche ab und verknüpft sie mit den jeweils infrage kommenden anlagenspezifischen Daten, z. B. mit den Daten einer bestimmten Weiche oder den Daten der in die Flankenschutzsuche einzubeziehenden konkreten Fahrwegelemente. Die anlagenspezifischen Daten werden bei der Projektierung eines Stellwerkes vom Projektierer aufgenommen, wobei dessen Arbeit unterstützt wird durch speziell entwickelte elektronische Hilfsmittel. Diese Hilfsmittel ihrerseits bestehen aus einer Eingabe- und Datensichtstation und sind so konzipiert, daß der Projektierer lediglich die jeweils relevanten Daten an vorgegebenen Stellen in auf einem Sichtgerät formatiert erscheinenden Listen einzutragen hat. Dabei findet gleichzeitig eine Vollständigkeitskontrolle statt. Weitere Projektierungswerkzeuge gestatten eine quantitative Auflistung der für eine Stellwerksanlage benötigten Hardware, die Erstellung der Belegungspläne für Schränke und Rechnerrahmen, die Plane zur Innenanlageverkabelung und die Erstellung der Plane der Außenanlage und deren Verkabelung (Signal + Draht, 77(1985)12, Seiten 259 bis 265).

Während es für die eigentlichen Projektierungsarbeiten, also die Auflistung der Element- und Anlagendaten, sowie die Erstellung von Fertigungsunterlagen gut funktionierende Hilfsmittel zu einer mindestens teilweise automatisierten Erstellung dieser Unterlagen gibt, trifft dies für die Erstellung der Systemsoftware und der bahnverwaltungsspezifischen Software und ihre Verknüpfung miteinander nicht zu. Die Erstellung und vor allem die Prüfung dieser Software ist außerordentlich zeit- und kostenaufwendig, weil sie regelmäßig in einer an die Betriebsweise von Rechnern angepaßten Programmiersprache und nicht in einer problem-orientierten Sprache erfolgt, welche das eigentliche Stellwerksgeschehen in einer für den Entwickler verständlichen Form beschreibt. Durch die Notwendigkeit, für diese Software einen Sicherheitsnachweis zu führen, vergrößern sich die Kosten und die Zeitspannen bis zum Inbetriebgehen derartiger Stellwerke erheblich.

Ändern sich die bislang berücksichtigten anwendungsspezifischen Forderungen an eine Steuerungsanlage, weil andere Bedingungen an das Prozeßgeschehen gestellt werden, so sind umfangreiche Programmierarbeiten zur Erstellung einer entsprechend abgewandelten Anwendersoftware nötig; mindestens bei sicherheitsrelevanten Prozeßsteuerungen ist dann auch ein gesonderter Sicherheitsnachweis erforderlich. Auch bei Änderungen der zu steuernden Anlage selbst müssen umfangreiche Neuprojektierungsarbeiten bewerkstelligt werden, auch wenn diese gegebenenfalls durch den Einsatz von speziellen Hilfsmitteln mindestens zum Teil zu automatisieren sind.

Ansätze in Richtung auf eine für den Entwickler verständliche und übersichtliche problemangepaßte Programmierung im Gegensatz zu einer ausschließlich rechnerorientierten Programmierung gibt es bei der sogenannten objektorientierten Programmierung (Computer Magazin 7-8/91, Seiten 34 bis 40). Bei der objektorientierten Programmierung wird zunächst das anwendungsorientierte Objekt "Steuerungssystem", z. B. "Stellwerk", in mehrere Ebenen von hierarchisch gegliederten Objektklassen unterteilt, von denen die höheren Klassen, z. B. die Signale, die allgemeineren und die nach unten hin gelegenen Klassen die spezielleren Objekte, z. B. die Vor- und Hauptsignale, beschreiben. Die einzelnen Objektklassen fassen jeweils Individualobjekte mit gleichen Eigenschaften zusammen. Die Beschreibung der Objekte und Objekttypen erfolgt innerhalb der einzelnen Klassen, wobei in Richtung auf die unteren Hierarchieebene immer speziellere Eigenschaften, in denen sich die Objekte voneinander unterscheiden, beschrieben sind. Innerhalb der einzelnen Ebenen sind auch die Verarbeitungsprogramme für die Objekte, die sogenannten Methoden, definiert. Sie bestehen wie herkömmliche Recherprogramme aus einer Abfolge von Befehlen zur Lösung einzelner Teilprobleme und müssen durch einen Programmierer nach den Anweisungen des Entwicklers erstellt werden. Es ist nicht vorherzusagen, wie mehrere solcher Teilprogramme wirken, wenn sie miteinander kombiniert werden. Insbesondere ist nicht auszuschließen, daß Programmfehler, die sich in ein Teilprogramm eingeschlichen haben, Auswirkungen auf das kombinierte Programm haben können, die nicht vorhersehbar und nur schwer auszumachen sind. Ein schwerwiegendes Problem objektorientierter Programmierung ist der Umstand, daß es keine Gewähr für Echtzeitverhalten gibt, weil nicht von vornherein erkennbar ist, wieviele Objekte in einer Bearbeitungsfolge miteinander zu verknüpfen sind.

Aufgabe der Erfindung ist es, ein Verfahren nach dem Oberbegriff des Patentanspruches 1 anzugeben, mit dessen Hilfe es möglich ist, auf übersichtliche und verständliche Weise eine Automatentafel zur vollständigen Beschreibung des Zustandsübergangs- und Ergebnisverhaltens eines komplexen Steuerungssytems zu generieren sowie eine Einrichtung zur Durchführung dieses Verfahrens anzugeben, die es gestattet, die Automatentafel weitgehend automatisch und damit fehlerfrei zu erstellen. Ferner ist es Aufgabe der Erfindung, eine so erstellte Automatentafel für die Steuerung eines Prozeßgeschehens zu verwenden.

Die Erfindung löst diese Aufgabe durch die kennzeichnenden Merkmale der Ansprüche 1, 6 bzw. 9. Vorteilhafte Ausgestaltungen der Erfindung sind in den auf diese Ansprüche direkt oder indirekt rückbezogenen Unteransprüchen angegeben.

Die Merkmale des Anspruches 1 beschreiben die Verfahrensschritte zum Generieren der Automatentafel, wie sie später von einem Rechner oder Rechnersystem zur Behandlung einer bestimmten Steuerungsaufgabe abzuarbeiten ist. Ein wesentlicher Vorteil dieses Verfahrens besteht darin, daß das jeweils zu lösende Problem zunächst in einer rechnerunabhängigen Fachsprache definiert und später durch einen schematischen Vorgang in ein für einen Rechner lesbares Programm umgesetzt wird, wobei durch eine spezielle Darstellung der Umfang für die bei der Problemlösung von einem Rechner abzuarbeitenden Bedingungen handhabbar gehalten werden kann. Das Zustandsübergangs- und Ergebnisverhalten der Objekte wird nicht durch die Ausgangs- und Folge zustände angegeben, sondern durch logische Funktionen, nach denen sich die Folgezustände und Ergebnisse aus den Ausgangs zuständen errechnen lassen.

Anspruch 2 benennt nähere Ausgestaltungen zu den für die einzelnen Objekte in der Automatentafel abzuspeichernden Zustandswerten und zu den Gesetzmäßigkeiten für den Zustandswechsel.

Die nach dem Anspruch 3 vorgesehene Aufteilung von Zustandsübergangsfunktionen in durch Eingabesymbole ausgelöste Funktionen und in Folgefunktionen, die vom jeweils erreichten Zustandswert des Steuerungsprozesses abhängig sind, macht es möglich, die einzelnen Zustandsübergangsbedingungen von ihrem Umfang her überschaubar zu machen und die beabsichtige Zustandsänderung über eine Folge von Zwischenzuständen zu erreichen, deren Zustandsänderungsfunktionen so häufig angewendet werden, bis sich keine neuen Folgezustände oder Ergebnisse mehr einstellen.

Als besonders vorteilhaft wird die Darstellung der logischen Gleichungen in Form von Binary Decision Diagrams gemäß Anspruch 4 angesehen, weil diese Darstellung bei Abspeicherung der Gleichungen mit noch vertretbarem Aufwand an Speichervolumen gestattet und weil es genügend Werkzeuge für die BDD-Darstellung von Funktionen gibt.

Durch Umsetzen der in der Automatentafel in kompakter Form niedergelegten Funktionen zum Berechnen von Folge zuständen und Ergebnissen in eine an die hardware des oder der Rechner, die die Automatentafel abarbeiten sollen, geeignete Form gemäß Anspruch 5 läßt sich eine besonders effiziente Prozeßsteuerung erreichen.

Anspruch 6 sieht die Verwendung eines Rechners oder Rechnersystems für die automatische Bestimmung der elementaren Zustandsübergangs- und Ergebnisfunktionen der Steuerungsobjekte einer Steuerungsanlage vor. Diese Zustandsübergangs- und Ergebnisfunktionen werden damit durch einen Rechner unabhängig von weiteren Mitwirkungen eines Menschen generiert, was zur Folge hat, daß die fertige Automatentafel, wenn dieser Generierungsprozeß abgeschlossen ist, auch tatsächlich fehlerfrei vorliegt. Der Sicherheitsnachweis für die Anwendung einer Automatentafel erstreckt sich damit im wesentlichen nur auf die Überprüfung der logischen Gesetzmäßigkeiten der in der Fachsprache verwendeten Sprachmittel, nicht aber auf die konkreten Einzelobjekte und auf den Generierungsprozeß.

Die automatische Generierung der elementaren Zustandsübergangs- und Ergebnisfunktionen läßt gemäß Anspruch 7 bestimmte Fehler, die sich bei der Formulierung der Fachsprachenausdrücke eingeschlichen haben konnten, bereits in der Erstellungsphase der Automatentafel dadurch erkennbar werden, daß der jeweilige Folgezustand bzw. die Ausgabe nicht ermittelbar ist.

Gemäß Anspruch 8 ist es von Vorteil, die Variablen, die bei einem solchen Fehler mitgewirkt haben, zu einer späteren Fehleranalyse abzuspeichern.

Anspruch 9 beinhaltet die Verwendung der nach den Merkmalen der vorangehenden Ansprüche erstellten Automatentafel für die Steuerung einer ganz bestimmten Anlage, für die diese Automatentafel zuvor erstellt wurde.

Anspruch 10 nennt zwei Alternativen für die Abarbeitung der Automatentafel in einem Rechner oder Rechnersystem.

Der Rechner oder das Rechnersystem, über das das Steuerungssystem betrieben werden soll, ist gemäß Anspruch 11 mit Speichern zum Hinterlegen der Automatentafel und der gültigen Zustandswerte der einzelnen Objekte zu versehen, wobei die Anordnung so getroffen ist, daß gemäß Anspruch 12 die jeweils berechneten Folgezustandswerte die davor aktuellen Zustandswerte in den Speichern überschreiben.

Gemäß Anspruch 13 ist vorgesehen, daß im Rechner bzw. Rechnersystem aus der Automatentafel die einzelnen Zustandsübergangsfunktionen abgelegt sind und daß von einem Eingabesymbol jeweils auf diejenigen Objektzustände hingewiesen wird, die sich bei diesem Eingabesymbol für das Objekt ändern können; nur diese Zustände müssen neu berechnet werden, alle übrigen bleiben bestehen.

Entsprechend der bei der Generierung der Automatentafel gewählten Unterteilung in Zustandsübergangs- und Ergebnisfunktionen, die durch Eingaben oder durch den jeweils erreichten Anlagenzustand angereizt werden, werden gemäß Anspruch 14 auch in dem Rechner bzw. Rechnersystem zur Anwendung der Automatentafel entsprechende Bearbeitungsaufteilungen vorgenommen.

Zum Berechnen zeitabhängiger Zustandsänderungsfunktionen sollen die Rechner bzw. Rechnersysteme gemäß Anspruch 15 über Timer verfügen, die nach Abarbeiten der Automatentafel gestartet werden und die bei ihrem Ablauf wieder als Eingaben auf den Automaten selbst einwirken. Dies ist deshalb erforderlich, weil die Automatentafel nur die Generierung von Folgezuständen ermöglicht, nicht jedoch Zeitbedingungen dabei berücksichtigt, wie sie für die Steuerung von Prozeßgeschehen erforderlich sein können.

Die Erfindung ist nachstehend anhand von in der Zeichnung dargestellten Ausführungsbeispielen näher erläutert.
- Figur 1: zeigt schematisch den Weg von der Erstellung einer Automatentafel bis zu ihrer Verwendung für die Steuerung eines bestimmten Prozeßgeschehens,
- Figur 2: die Bildung der Automatentafel,
- Figur 3: ein Schema zum Bestimmen der Zustandsübergangs- und Ergebnisfunktionen eines Objektes und
- Figur 4: ein Beispiel für die nach der Erfindung vorgesehene Darstellung logischer Funktionen in Form von Binary Decision Diagramms.

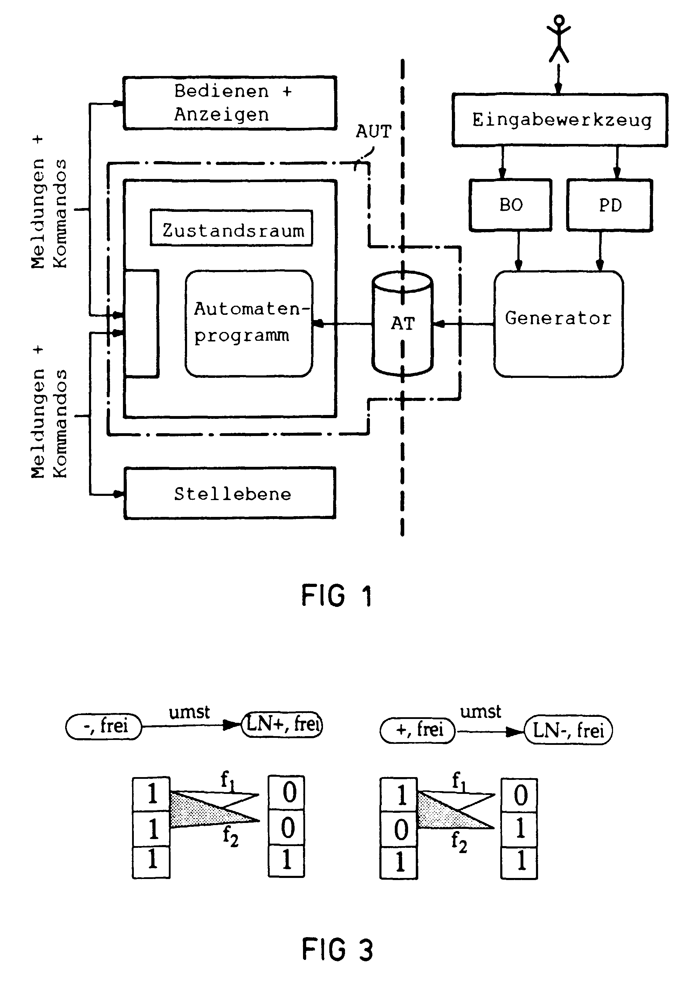

Figur 1 zeigt in einer schematischen Darstellung den Weg zum Herstellen eines Programms und die Anwendung dieses Programms zur Lösung der Steuerungsaufgaben eines beliebigen Prozeßgeschehens. Die Beschreibung der Steuerungsaufgabe und damit die Programmgestaltung basieren auf einer Modellbetrachtung des ausführenden Schaltwerks als endlicher Automat AUT mit Ein- und Ausgaben . Dieser Automat kommuniziert mit seiner Umgebung über zwei Kanäle: Aus einer Bedienebene empfängt der Automat Informationen über Bedienungshandlungen, die z. B. durch Eingaben eines Bedieners von Hand an einer Tastatur ausgelöst oder durch ein bestimmtes zuvor festgelegtes Ereignis angereizt werden können. In umgekehrter Richtung sendet der Automat Informationen über Systemzustände an die Bedienebene, beispielsweise zum Zwecke der Anzeige oder zum Zwecke der Protokollierung. An die Stellebene sendet der Automat Befehle für die Elemente (Objekte) des jeweils betrachteten Steuerungssystems und er empfängt von dort Meldungen über die Zustände der einzelnen Prozeßelemente; jede derartige Meldung verändert seinen internen Zustand, der durch die Summe aller Einzelzustände seiner Objekte definiert ist.

Der Automat AUT verfügt über ein logisches Abbild des Betriebszustandes des Steuerungssystems (Zustandsraum), das zum Teil eine direkte physische Entsprechung besitzt in Form von Einzelzuständen der Prozeßelemente, zum Teil aber auch ausschließlich logische Bedeutung hat in Form von Zustandswerten von in bestimmter Form logisch verknüpften Elementen. Zum besseren Verständnis dieser und der folgenden Ausführung sei dem Automaten eine bestimmte Steuerungsaufgabe zugewiesen, nämlich die Steuerung eines Stellwerkes für den Eisenbahnbetrieb. Die dem Automat bekannten und von ihm verwalteten Zustände beziehen sich dann auf die gegenständlich vorhandenen Prozeßelemente und betreffen z. B. die Lage von Weichen, den Frei- und Besetztzustand von Gleisabschnitten und die jeweils angeschalteten Lichtsignalbegriffe sowie die Topographie der zu steuernden Anlage. Zu den Betriebszuständen mit ausschließlich logischer Bedeutung gehören z. B. die Bildungszustände der einzelnen Fahrstraßen während ihres Aufbaus und Auflösens.

Um seine Aufgabe als freiprogrammierbares Schaltwerk zur Steuerung des Prozeßgeschehens "Stellwerk" ausführen zu können, muß der Automat neben der Kenntnis der aktuellen Zustände der zu steuernden Objekte auch Bescheid wissen darüber, wie aus den gegenwärtigen Objektzuständen auf Folgezustände überzugehen ist. Ein neuer Folgezustand eines Objektes kann beispielsweise in einer neuen Weichenlage, in einer Anderung des Freimeldezustandes oder in einer Änderung eines angeschalteten Signalbegriffes bestehen; eine Ausgabe an den Prozeß als Ergebnis eines bestimmten Eingabesymbols und eines Objektzustandes kann z. B. in einem Stellimpuls zum Einleiten eines Weichenumlaufs oder im Anschalten eines Lichtsignalstellers bestehen. Üblicherweise greift der Automat AUT hierzu auf eine Automatentafel AT zu, in der die jeweiligen Folgezustände eines Objektes und ggf. zu veranlassende Ausgaben (Ergebnisse) in Abhängigkeit von den gegenwärtigen Objektzuständen und den jeweiligen Eingabesymbolen (Eingaben und Meldungen) aufgelistet sind. Diese Automatentafeln sind, abhängig von der Komplexität des jeweiligen Steuerungssystems, meist recht aufwendig.

Bei umfangreichen Steuerungssystemen wie beispielsweise bei Stellwerken ist die Anzahl der Objekte des SteuerungsSystems und die Komplexität der logischen Verknüpfungen, also die Anzahl der gegenwärtigen und der zukünftigen Objektzustände so groß, daß diese nicht mehr explizit, d. h. durch vollständige Aufzählung, vom Menschen angegeben werden können; die Wahrscheinlichkeit, daß bei der Erstellung der Automatentafel durch den Menschen fehlerhafte Zustände formuliert werden, ist außerordentlich groß. Die Erfindung, soweit sie sich auf die Erstellung der Automatentafel bezieht, geht von der Erkenntnis aus, daß die Zustandsmenge und die Zustandsübergänge der Objekte eines Steuerungssystems wegen der Gleichheit und der Ähnlichkeit der physikalischen und logischen Objekte ein hohes Maß an Regelmäßigkeit aufweisen und daß auch bei großen Systemen die Zustandsübergänge meist nur von einem sehr kleinen Ausschnitt des Zustandsraumes, d. h. einzelnen Zuständen dieser Objekte, abhängen und daß diese mit ihrem Folgezustand auch nur einen kleinen Teil der Zustandsmenge verändern. Sie geht deshalb von der Überlegung aus, daß es möglich sein müßte, eine Automatentafel zu erstellen, in der das Zustandsübergangs- und Ergebnisverhalten der Objekte durch logische Funktionen beschreibbar ist, die auf bestimmte augenblickliche Zustände der Objekte anzuwenden sind. d. h. die Folgezustände und Ergebnisse liegen nicht vorab vorausbestimmt in der Automatentafel vor, sondern werden aus den gegenwärtigen Zuständen unter Verwendung von in der Automatentafel hinterlegten Funktionen fallweise berechnet. Die Erfindung sieht vor, daß das komplexe Zustandsübergangs- und Ergebnisverhalten der Objekte in mehreren aufeinander aufbauenden Schritten analysiert und in Funktionen umgesetzt wird, wobei die Bedingungen zum Beginn der Generierungsphase noch recht allgemein gehalten und in ihrer Formulierung möglichst prozeßnah ausgeführt sein sollen, um dann schrittweise immer komplexer zu werden, bis sie schließlich ihren Endzustand in den elementaren objektbezogenen Zustandsübergangs- und Ergebnisfunktionen der Automatentafel des Steuerungssystems gefunden haben. Nach einer besonders vorteilhaften Ausbildung des erfindungsgemäßen Verfahrens sollen die komplexen Zustandsübergangs- und Ergebnisfunktionen innerhalb der Automatentafel in einer komprimierten Form dargestellt werden, die einerseits den Speicheraufwand für die Automatentafel begrenzt und andererseits, was mindestens ebenso wichtig ist, die Bearbeitungszeiten für die Übergangsfunktionen kurz macht. Ein wesentlicher Vorteil der vorausberechneten bzw. vorausberechenbaren Automatentafel ist der, daß das Funktionsverhalten des Gesamtsystems vor Einschalten des Systems bekannt ist.

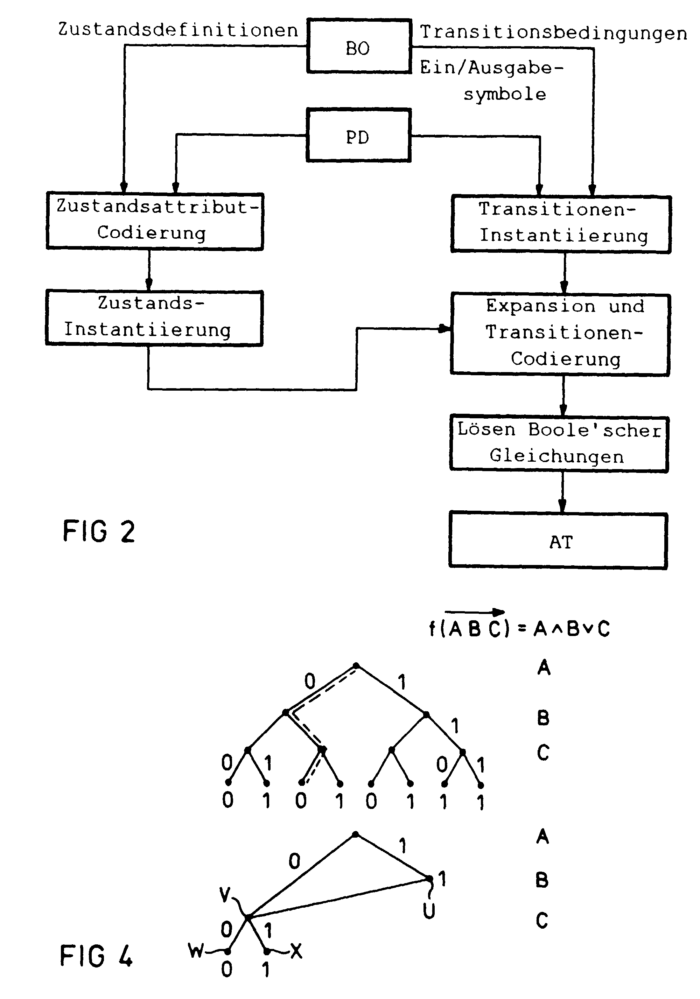

Für die Erstellung der Automatentafel, die nachfolgend anhand der Figur 2 erläutert ist, benötigt der Entwickler Eingabewerkzeuge, mit denen er die Betriebsordnung BO, also die anwenderorientierten Regeln für die Bearbeitung des Betriebsgeschehens und die Projektierungsdaten PD der Anlage in Form der Topographie der konkreten Anlageobjekte, der erfindungsgemäßen Generierung der Automatentafel zuführt. Wie das im einzelnen geschieht, ist aus Figur 2 ersichtlich, die hierzu wiederum Bezug nimmt auf die übrigen Figuren der Zeichnung.

In der Betriebsordnung BO ist festgelegt, unter welchen Bedingungen auf ein Objekt z. B. des Typs Weiche eingewirkt werden darf. So darf eine Weiche nur dann umgestellt werden, wenn sie frei und nicht verschlossen ist. Diese Bedingungen sind für eine entsprechende Umstellerlaubnis aufzuprüfen und müssen in geeigneter Form abgespeichert vorliegen. Im ersten Schritt, der sogenannten Zustandsattributkodierung, erfolgt die Bestimmung des Speicheraufwandes, der zum Beschreiben des Zustandsraumes der einzelnen Objekttypen als Teil des Zustandsraumes des Gesamtsystems benötigt wird. Unter Objekttypen werden hier die unterschiedlichen Arten von Objekten verstanden, bezoqen auf das Steuersystem "Stellwerk", also Weichen, Signale, Gleise und Fahrstraßen. Jedes Zustandsattribut, d. h. jede Zustandsart, beinhaltet eine von zwei möglichen Alternativen. So kann z. B. bezüglich des Freimeldezustandes einer Weiche gesagt werden, daß sie entweder freigemeldet oder besetztgemeldet ist. Für die Darstellung dieses Zustandsattributes wird ein Bit benötigt, das abhängig vom jeweiligen Wert, durch eine Meldung entweder auf high oder low gesetzt wird. Eine Weiche kann sich, was ihre Lage angeht, üblicherweise nur entweder in der Pluslage oder in der Minuslage befinden, oder aber sie läuft gerade in eine dieser Endlagen und befindet sich zwischen diesen. Für die Darstellung dieser beiden Alternativpaare werden zwei Bits zur Zustandsbeschreibung benötigt. Insgesamt gibt es für die Zustandsattributbeschreibung von Weichen noch sehr viel mehr Parameter wie z. B. den Fahrstraßenverschluß, die Auffahrmeldung oder die Störungsmeldung. Alle diese Zustandsattribute werden für jeden Objekttyp der Steuerungsanlage bestimmt und in ihrer Zuordnung zueinander festgelegt, d. h. es wird genau gesagt, an welcher Stelle innerhalb der Zustandsattributbeschreibung z. B. der Feimeldezustand und wo der Lage zustand kodiert hinterlegt ist. Ferner werden in der Phase der Zustandsattributkodierung die Anzahl und die Lage der Bits im Zustandsvektor für die Beschreibung der unveränderlichen Merkmale der verschiedenen Objekttypen ermittelt und als Platzhalter für die konkreten Objektdaten typbezogen hinterlegt. Am Ende der Zustandsattributkodierungsphase liegen für alle Objekttypen eines Steuerungssystems Schablonen vor, die besagen, welche Zustände und Merkmale für ein Objekt des betreffenden Typs beschrieben werden müssen, damit der Automat später ein umfassendes Bild über den Zustandsraum des betreffenden Objektes gewinnen kann.

Der zweite Schritt, die sogenannte Zustandsinstantiierung, beinhaltet die Anwendung der zuvor gefundenen Schablonen auf die in der Anlagenbeschreibung, den Projetierungsdaten PD der Anlage, enthaltenen Steuerungsobjekte. Hierdurch entsteht ein Vektor von Aussagenvariablen, die den Zustandsraum des Gesamtsystems repräsentiert. Würde man z. B. zum Beschreiben der möglichen Zustände des Elementtyps Weiche drei Bits benötigen und würde die Anlage hundert Weichen enthalten, so würde der Bitvektor für die Beschreibung aller Weichen des Systems 300 Bits umfassen. Tatsächlich ist der Speicherbedarf allein für die Beschreibung der Weichen sehr viel größer, weil für die Weichen neben den veränderbaren Zustandsangaben - wie bereits ausgeführt-auch unveränderbare Merkmale zu hinterlegen sind. Dies geschieht dadurch, daß für jede Weiche ein zugehöriger Name festgelegt und die Lage dieser Weiche im Gleisplan exakt angegeben wird. Hierzu wird die Gleisanlage z. B. in Segmente unterteilt, die jeweils der Position eines der gegenständlichen Objekte entsprechen. Die einzelnen Segmente sind an den Endpunkten mit Nachbarsegmenten verbunden. Ein Segment kann dabei einem Objekt mit einer realen Längenausdehung, z. B. einem Gleis, entsprechen, es kann aber auch lediglich als Markierung für den Standort eines punktförmigen Objektes, z. B. eines Signals, dienen. Auch einem solchen punktförmigen Objekt ist ein Segment mit zwei unterscheidbaren Endpunkten zugeordnet, wodurch sich für dieses Objekt eine fahrrichtungsabhängige Kennzeichnung ergibt. Die Punkte, an denen die Segmente miteinander verbunden sind, können willkürlich numeriert werden und dienen zur Beschreibung von Pfaden innerhalb der zu steuernden Anlage, die zu verschiedenen Beschreibungszwecken wie z. B. für einen Fahrweg, einen Durchrutschweg oder für die Flankenschutzsuche benötigt werden. Die Topographie einer Gleisanlage wird damit z. B. durch einen beschrifteten Graphen repräsentiert, aus dem die Verbindungsstruktur der Objekte hervorgeht. Für die Beschreibung von Fahrstraßen und Fahrwegen werden die jeweils zu beteiligenden Fahrwegelemente aufgelistet und für die einzelnen Fahrstraßen oder Fahrwege objektbezogen abgelegt. Eine andere Möglichkeit zur Topographiebeschreibung besteht z. B. in der listenmäßigen Erfassung von Nachbarschaftsbeziehungen.

Neben der Kenntnis der Zustände und Merkmale der einzelnen Objekte benötigt der Automat über die Automatentafel Kenntnis über das Zustandsübergangs- und Ergebnisverhalten der Objekte, um hieraus Folgezustände der Objekte und Ausgaben ermitteln zu können. Nach der Lehre der vorliegenden Erfindung soll das Zustandsübergangs- und Ergebnisverhalten der einzelnen Objekte durch Angabe von Funktionen beschrieben werden, nach denen sich die Folgezustände und die Ergebnisse jeweils aus den augenblicklichen Zuständen der betreffenden Objekte und den auf sie wirkenden Eingabesymbolen errechnen lassen. Für die Erstellung der Automatentafel ist es daher erforderlich, die entsprechenden Übergangsbedingungen zu ermitteln und festzulegen. Dies geschieht zunächst auf Elementtypebene, d. h. ohne konkreten Bezug zu einem bestimmten Objekt. Die Beschreibung der logischen Gesetzmäßigkeiten des Zustandsübergangsverhaltens der Objekte beim Übergang aus einem gegenwärtigen Zustand in einen direkten Folgezustand sowie die Beschreibung des Ergebnisverhaltens der Steuerungsobjekttypen ergibt sich aus der Betriebsordnung BO, in der anzugeben ist, unter welchen Bedingungen sich derartige Änderungen bzw. Ausgaben ergeben sollen. Für die spätere Generierung der Automatentafel werden diese logischen Gesetzmäßigkeiten in der Betriebsordnung in einer anwendungsorientierten Fachsprache beschrieben, deren Sprachmittel die Bedingungen für das Erreichen des jeweiligen Folgezustandes oder Ergebnisses als logische Verknüpfung von elementaren Zustandswerten angeben. Konkret für den Anwendungsfall Weiche heißt dies z. B., daß eine Weiche nach Eingabe des entsprechenden Steuerkommandos (Eingabesymbol) nur dann umlaufen darf, wenn sie auch umstellbar ist. "Umstellbar" als Sprachbegriff einer anwendungsbezogenen Fachsprache beinhaltet begrifflich, daß die Weiche frei ist und sich in einer Endlage befindet. Dabei kann sie nur dann z. B. nach Minus laufen, wenn sie zuvor die Pluslage eingenommen hatte. Die Transitionsbedingung (Zustandsübergangsbedinqung) einer Weiche für den Lauf nach Minus auf Elementtypebene lautet dann z. B.
umstellbar(Weiche) ∧ plus(Weiche) ** laufNachMinus(Weiche)

Der Folgezustand, gekennzeichnet durch **, "Lauf nach Minus(Weiche)"wird fachsprachlich durch die Bedingungen "umstellbar(Weiche) ∧ plus (Weiche)" beschrieben. Die Fachsprache und deren Sprachmittel, die vom Entwickler gewählt, optimiert und festgelegt werden, sind immer problembezogen und unterscheiden sich in Abhängigkeit vom jeweiligen Anwendungsfall. Für den Anwendungsfall Stellwerk sind die Sprachmittel unabhängig von der Topographie der zu steuernden Anlage und den Funktionsbedingungen der jeweiligen Betriebsordnung, die von Anwender zu Anwender verschieden sein kann, gleich, wobei allerdings bei unterschiedlichen Betriebsordnungen verschiedener Betreiber die Sprachmittel durchaus unterschiedliche logische Verknüpfungen von Zustandswerten beinhalten können, so beispielsweise, wenn eine Weiche nur umstellbar sein darf, wenn sie zuvor auch verschlossen war. In diesem Falle muß entweder in den Ausgangs-Zustandswert der Weichenlage der Verschluß impliziert sein oder aber es muß ein zusätzliches Zustandsattribut bereitgestellt werden, das in die Transitionsbedingungen aufzunehmen ist.

In einem folgenden Verfahrensschritt erfolgt die Instantiierung der Transitionsbedingungen auf Objektebene. Ähnlich wie bei der Zustandsinstantiierung werden hier die auf den jeweiligen Objekttyp bezogenen Transitionsbedingungen durch Anwendung der zuvor gefundenen Schablone auf die einzelnen Objekte bestimmt und damit vervielfältigt nach der Anzahl der vorhandenen Objekte. Bezogen auf das vorstehend angezogene Beispiel des Umlaufs einer Weiche nach Minus ergibt sich z. B. für die Weiche W001 eines konkreten Gleisplans die Transitionsbedingung
umstellbar(W001) ∧ plus(W001) ** laufNachMinus(W001).

Auch nach der Transitioneninstantiierung liegen die Änderungsbedingungen noch in fachsprachlicher Ausführung vor, die vom Anwender noch ohne weiteres lesbar sind. Dies ändert sich in den folgenden Verfahrensschritten, von denen der erste die sogenannte Expansions- und Transitionenkodierung beinhaltet. Hierunter wird verstanden die Ermittlung der elementaren zustandsübergangs- und Ergebnisfunktionen aller Steuerungsobjekte und ihre Kodierung in binärer Form. Beim Expandieren werden zunächst nur die zuvor verwendeten Sprachmittel der Fachsprache durch die entsprechenden elementaren Zustandswerte ersetzt. Für das angenommene Beispiel heißt dies
(plus(W001) ∨ minus(W001)) ∧frei (W001)∧plus(W001)** laufNachMinus(W001)).

Die so gefundenen elementaren Zustandsübergangsfunktionen für die einzelnen Objekte werden nun kodiert unter Verwendung der zuvor für die Objekte festgelegten Kodierungsparameter. Dabei gibt es nicht nur die erläuterten Zustandswerte für die jeweiligen Ausgangszustände, sondern auch entsprechende Zustandswerte für die Folgezustände; für beide wurden bei der Zustandsinstantiierung entsprechende Speicherbereiche reserviert.

In entsprechender Weise wird auch das Zustandsübergangssowie Ergebnisverhalten aller anderen Objekte durch fachsprachliche Umschreibungen von Änderungs- bzw. Ergebnisbedingungen bestimmt und durch Instantiierung, Expansion und Kodierung objektbedingt beschrieben.

Am Ende der Expansions- und Transitionskodierungsphase sind für alle Objekte alle möglichen gegenwärtigen Zustände in Zuordnung zu den zukünftigen Zuständen bekannt, wobei immer nur jeweils einer der gegenwärtigen Zustandswerte eines Objektes den tatsächlichen Zustandswert trifft. Um nun von den möglichen gegenwärtigen Zustandswerten zu dem jeweils zugehörigen zukünftigen Zustandswert zu gelangen, wird aus den zuvor bestimmten und für ein bestimmtes Objekt bei einem bestimmten Eingabesymbol geltenden Transitionsbedingungen ein Boole'sches Gleichungssystem gewonnen und mit der Methode der Boole'schen Unifikation gelöst. Die Lösung eines Boole'schen Gleichungssystems geschieht analog zur Lösung eines linearen Gleichungssystems. Die Boole'schen Gleichungen werden so aufgestellt, daß sie eine Formalisierung der Aussage "fᵢₙₚ (z. B. umstellen) respektiert alle Tansitionen zu inp (z. B. umstellen)" bilden. Jede Gleichung des Systems ist von der Form f(...Cᵢ...Zⱼ...) = 1, d. h. wahr, wobei der Term auf der linken Seite aus einer kodierten, expandierten Transition hervorgeht und sowohl Aussagevariablen enthält, die sich auf den aktuellen Zustand des Objektes beziehen (...Cᵢ...) als auch auf seinen Folgezustand (...Zⱼ...). Für die Lösung des Gleichungssystems werden die Aussagevariablen Cᵢ als Konstanten betrachtet und das Gleichungssystem nach Zⱼ aufgelöst. Dadurch ergibt sich jedes Zⱼ als Funktion Zⱼ = fⱼ (...Cᵢ...) . Die Funktionen fj bilden gemeinsam die Funktion fᵢₙₚ. Jedes fⱼ bestimmt den Wert des j-en bits im Folge zustand in Abhängigkeit von den Bits des gegenwärtigen Zustands.

Diese Zusammenhänge sind nachfolgend anhand der Figur 3 graphisch verdeutlicht. Das Beispiel bezieht sich auf das Umstellen einer Weiche. Liegt die Weiche in der Minuslage und ist sie frei, so kann sie auf einen entsprechenden Umsteuerbefehl (Eingabesymbol) nach Plus umlaufen und sie bleibt dabei frei. Liegt die Weiche in Pluslage und ist sie frei, so kann sie auf einen entsprechenden Umsteuerbefehl nach Minus umlaufen, wobei sie dann ebenfalls frei bleibt. Unterhalb dieser beiden in Figur 3 angegebenen Transitionsbedingungen sind jeweils drei einen möglichen Gesamtzustand einer Weiche im Zustandsvektor beschreibende elementare Zustandswerte aufgeführt. Die ersten beiden Zustandsbits beziehen sich entsprechend der bei der Zustandsinstantiierung festgelegten Zuordnung auf die Weichenlage, das dritte Zustandsbit bezeichnet den augenblicklichen Frei/Besetztzustand einer Weiche. Die jeweils links stehende Bitkombination kennzeichnet den augenblicklichen Zustand einer Weiche, die rechte Bitkombination den zugehörigen Folge zustand wie er durch das Eingabesymbol "umstellen" angereizt wird. Im ersten Fall wird der gegenwärtige Zustandswert durch drei Bits der Wertigkeit 1 dargestellt. Der neue Zustand der Weiche nach Beginn des Umlaufs beinhaltet Bitkombinationen, die dem Lauf nach plus und dem Freizustand der Weiche entsprechen; die Bitkombinationen für den Folgezustand entsprechen inhaltlich den Bitkombinationen für die Kennzeichnung der entsprechenden augenblicklichen Zustandswerte. Für den Lauf nach plus war bei der Zustandsinstantiierung die Bitfolge 00 festgelegt worden. Durch Anwendung bekannter mathematischer Algorithmen werden nun durch Dreiecke verdeutlichten Funktionen bestimmt, welche die Eingangsvariablen 11 in die dargestellten Ausgangsvariablen 00 umsetzen. In entsprechender Weise verhält es sich mit den Funktionen beim Umsetzen der Eingangsvariablen 10 für die aus der Pluslage umlaufende Weiche beim Umsetzen in die Ausgangsvariablen 01. Durch Anwendung der Methode der Boole'schen Unifikation gelangt man in bekannter Weise zu Funktionen f1 und f2, die jeweils für die im Beispiel zwei Eingangsvariablen und eine Ausgangsvariable Gültigkeit haben, unabhängig von deren jeweiligen binären Werten.

Würde man dem Automaten die so gefundenen Funktionen über die Automatentafel mitteilen, so wäre er in der Lage, die Steuerung des Prozeßgeschehens zu übernehmen. Um die nach der Erfindung vorgesehene Beschreibung des Zustandsübergangs- und Ergebnisverhaltens der Objekte durch Zustandsübergangs- und Ergebnisfunktionen in einer einzigen Automatentafel für das gesamte System handhabbar zu machen, sieht das erfindungsgemäße Verfahren vor, die Boole'schen Gleichungen für die Beschreibung des Zustandsübergangs- und Ergebnisverhaltens in kompakter Weise darzustellen, beispielsweise in Form von Binary Decision Diagramms (BDD). Die Darstellung logischer Funktionen als Binary Decision Diagramms als solche ist an sich bekannt (IEEE Transaction on Computers, Vol. C35 Nr. 8, August 1986, Seiten 677 bis 691); ihr Einsatz zu einer effizienten Speicherung von Steuerungsinformationen ist jedoch neu. Die Ermittlung der Automatentafel durch Lösen der zuvor ermittelten Gleichungen für das Zustandsübergangs- und Ergebnisverhalten geschieht unter Anwendung der kompakten Darstellungsform der Gleichungen mit dem Ergebnis, daß auch die Zustandsübergangs- und Ergebnisfunktionen dieser kompakten Darstellungsform genügen. Die entstehende Automatentafel kann für ein konkretes Zielsystem in eine andere, für dieses Zielsystem optimierte Darstellung überführt werden.

Die Wirkungsweise der Binary Decision Diagramms (BDD) für die effiziente Abspeicherung der Funktionen zum Ermitteln von Folgezuständen und Ergebnissen aus den augenblicklichen Zustandswerten von Objekten ist nachfolgend anhand der Figur 4 näher erläutert. Es ist angenommen, daß die Funktion f(A, B, C) zum Umsetzen von Eingangsvariablen in Ausgangsvariable der Bedingung A ∧ B ∨ C genügt. Für diese Funktionen ergibt sich der in Figur 4 dargestellte Graph, dessen Schichten den Variablen der Boole'schen Funktion entsprechen. Dieser Graph läßt sich als graphische Darstellung einer Entscheidungstabelle auffassen, weil das Auswerten der Funktion geschieht, indem ein Pfad vom Stamm bis zu einer Wurzel verfolgt wird, wobei die Entscheidung über den jeweiligen Weg an den Verzweigungspunkten durch die Verknüpfungsregel der Boole'schen Funktion vorgegeben ist. Falls die Variable, die dem jeweiligen Niveau entspricht, den Wahrheitswert 0 besitzt, verweist diese Variable auf den jeweils linken Suchweg, weist sie den Wahrheitswert 1 auf, dann verweist sie auf den rechten Suchweg. Die Wurzelenden repräsentieren die Wahrheitswerte 0 oder 1: Endet ein Suchlauf bei einer 0-wurzel, ist der Wert der Funktion für die konkreten Variablen gleich 0, endet er bei einer 1-wurzel, so ist der Wert gleich 1. Für eine Funktion f = A Λ B ∨ C, bei der die Variable A den Werte 0, B den Wert 1 und C den Wert 0 haben, ergibt sich der im oberen Graph der Figur 4 gestrichelt angedeutete Suchweg, der als Ergebnis den Wert 0 angibt.

Die durch die Anwendung der Binary Decision Diagramms bewirkte Verkürzung des Laufweges beim Bestimmen einer Funktion beruht darauf, daß jeweils mehrfach vorkommende Teilwurzeln jeweils nur einmal abgespeichert sind, um so zu einer möglichst kompakten Darstellung zu gelangen. Das dem Graph im oberen Teil der Figur 4 entsprechende Diagramm in BDD-Darstellung ist im unteren Teil der Figur 4 angegeben. Ganz offensichtlich ist es so, daß die Funktion nur dann den Wert 1 annimmt, wenn sowohl A den Wert 1 als auch B den Wert 1 haben, egal welchen Wert C dabei einnimmt, oder wenn C den Wert 1 einnimmt, egal welchen Wert A oder B aufweisen. Bezüglich des ersten Terms A = 1, B = 1 endet die Wurzel am Knoten U, bezüglich der Variablen C beginnt der eigentliche Entscheidungsvorgang erst am Knoten V. Zu diesem Knoten gelangt man auf dem rechten Strang, wenn sowohl A als auch B jeweils den Wert 1 einnehmen und auf dem linken Strang, wenn diese Variablen jeweils den Wert 0 einnehmen. Auf diesem linken Strang verfährt man auch wenn nur eine der Variablen A oder B den Wert 0 einnimmt, weil die logische Verknüpfung dieser Werte ebenfalls zum Wert 0 führt. Unabhängig von den logischen Werten der Variablen A und B endet der Suchvorgang für die Variable C = 0 am Knoten W und bei der Variablen C = 1 am Knoten X. Die an den Endknoten U, W und X angegebenen Werte stellen das Ergebnis der angenommenen Funktion dar.

In ein und demselben Binary Decision Diagramm lassen sich mehrere Boole'sche Funktionen darstellen, indem man für jede Funktion einen Einstiegsknoten markiert und von dort zu den Wurzel spitzen durchlaufend die entsprechende Funktion in der geschilderten Weise darstellt. Solche Diagramme für mehrere Boole'sche Funktionen werden als BDD-Geflecht bezeichnet.

Das Auffinden der Ergebniswerte von Funktionen auf kürzesten Weg nach dem Prinzip von BDD's ist nicht auf die graphische Darstellung in einem sich verzweigenden Graph beschränkt, sondern läßt sich durch eine entsprechende Programmstruktur auch in einem Rechner realisieren, wobei es Rechnerroutinen für die Bestimmung von BDD-Darstellungen aus beliebigen Funktionen gibt. Die Erfindung nutzt die Existenz derartiger BDD's, um die Zustandsübergangs- und Ergebnisfunktionen, die sie zum Bestimmen der jeweiligen Folgezustände und Ergebnisse bei der Steuerung eines umfangreichen Prozeßgeschehens verwendet, auf besonders effiziente Weise darzustellen und in einem Speicher zu hinterlegen. Der Vorteil der Hinterlegung der übergangsfunktionen in BDD-Darstellung ist neben der Begrenzung des Speicherbedarfes die Verkürzung der Bearbeitungszeit zum Auffinden der Folgezustandswerte, was sich an dem sehr einfachen Ausführungsbeispiel der Figur 4 daran zeigt, daß zur Lösung der angenommenen Funktion auf herkömmliche Art und Weise stets vier Knoten durchlaufen werden müssen, während dies in BDD-Darstellung nur drei Knoten sind. Dieser Einsparungseffekt ist bei komplizierteren Funktionen wie sie sich real bei der Bestimmung der Übergangs funktionen großer Steuerungssysteme darstellen, noch beträchtlich höher als in dem simplen Ausführungsbeispiel der Figur 4.

Die Sammlung der objektbezogenen Funktionen zusammen mit Angaben, welches Bit eines Nachfolge zustandes unter welchen Bedingungen (Eingabesymbol) jeweils ausgerechnet werden soll, bildet die Automatentafel, wie sie durch die Anwendung des erfindungsgemäßen Verfahrens dargestellt ist. Auf die Anwendung der Automatentafel in einem Rechner oder Rechnersystem zur Steuerung eines Prozeßgeschehens wird später näher eingegangen.

Die Beschreibung der Steuerungsfunktionen eines Stellwerkes oder eines anderen umfangreichen Prozeßgeschehens jeweils als Abfolge eines gegenwärtigen Zustandes und eines Folgezustandes (Fig. 3) ist außerordentlich aufwendig. Oftmals ist es einfacher, einen Zustandsübergang nicht in Abhängigkeit von einem bestimmten Eingabesymbol zu beschreiben, sondern in Abhängigkeit von einem schon existierenden internen Zwischenzustand des Steuerungssystems. Nach einer besonders vorteilhaften Ausgestaltung des erfindungsgemäßen Verfahrens werden deshalb einzelne Übergangsfunktionen nicht unmittelbar durch ein Eingabesymbol angereizt, sondern durch den jeweils erreichten Zwischenzustand der Anlage. Für jedes Objekt sind die zugehörigen Zustandsübergangsfunktionen, deren Ausführung vom jeweils erreichten Zwischenzustand des Objektes abhängig sind, festzulegen und diese Funktionen kommen bei der Abarbeitung der Automatentafel zur Anwendung, sobald das Eingabesymbol auf das betreffende Objekt verwiesen hat und die dadurch angereizte direkte Transitionbedingung abgearbeitet wurde. Der erreichte Folgezustand veranlaßt dann die Abarbeitung der Transitionsbedingungen, die durch den Folgezustand angereizt wurden. So werden jeweils nach Abarbeitung eines Eingabesymbols die zustandsorientierten Zustandsübergangsbedingungen solange aufeinanderfolgend abgearbeitet, bis sich kein neuer Folgezustand des Gesamtsystems und keine Ausgabe mehr einstellt. Danach kann sich ein folgendes Eingabesymbol durchsetzen und eine weitere Behandlung dieses oder eines anderen Objektes veranlassen.

Ein besonderer Vorteil des erfindungsgemäßen Verfahrens besteht darin, daß dann, wenn die Gesamtheit der Transitionen eines Eingabesymbols versehentlich so spezifiziert wurde, daß zu einem gegenwärtigen Zustand sich widersprechende Bedingungen für den Folgezustand angegeben sind, schon in der Entwicklungsphase, also bei der Erstellung der Automatentafel, dieser Fehler dadurch erkannt wird, daß es keine alle Übergangsfunktionen eines Objektes beschreibende Boole'sche Gleichung gibt, d. h. das Gleichungssystem keine Lösung besitzt. Die weitere Generierung der Automatentafel wird dann unterbrochen und aus der bis dahin anfallenden Information kann eine Beschreibung der Zustände erzeugt werden, für die das Automatenverhalten undefiniert ist. Alle Gegenwartszustände, zu denen Folgezustände widersprüchlich spezifiziert wurden, können zur Fehleranalyse abgespeichert und ausgegeben werden.

Nach dem Abspeichern der Zustandsübergangs- und Ergebnisfunktionen in der Automatentafel läßt sich eine Aussage darüber gewinnen, wie lange ein Rechner, der die Automatentafel zur Lösung eines bestimmten Problems abarbeiten soll, für die Bearbeitung der einzelnen Vorgänge benötigen wird. Es läßt sich so abschätzen, ob der Automat Echtzeitverhalten hat.

Die Erfindung sieht in vorteilhafter Weise den Einsatz eines Rechners zur Durchführung des erfindungsgemäßen Verfahrens der Erstellung einer Automatentafel vor; es kann sowohl ein Einzelrechner als auch ein Rechnersystem zur Anwendung kommen. Seine Aufgabe ist es u. a., die elementaren Zustandsübergangs- und Ergebnisfunktionen sämtlicher Steuerungsobjekte der Steuerungsanlage durch Anwendung der definierten logischen Gesetzmäßigkeiten des Zustandsübergangs- und Ergebnisverhaltens der Steuerungsobjekttypen auf die Steuerungsobjekte der konkreten Steuerungsanlage zu ermitteln, d. h. er hat mindestens die Expansion und Transitionen-Codierung, ggf. auch die Zustands- und Transitionen-Instantiierung durchzuführen. Diese Vorgänge laufen dann unabhängig von der Mitwirkung eines Bedieners ab und sind daher weitestgehend fehlerunempfindlich. Eine weitere Aufgabe dieses Rechners ist die Ermittlung der elementaren Übergangs- und Ergebnisfunktionen und die Darstellung dieser Funktionen z. B. in Form von Binary Decision Diagrams.

Die Arbeit dieses Rechners nach der Erstellung der Automatentafel ist beendet. Die Automatentafel kann in Gestalt einer Diskette, eines EPROMS oder eines sonstigen Speichermittels vom Entwicklungsrechner getrennt und einem oder mehreren Rechnern gegenständlich oder inhaltlich zugeführt werden, die für die Steuerung des eigentlichen Prozeßgeschehens vorgesehen sind. Dieser Rechner oder dieses Rechnersystem dient dann zum Abarbeiten der nach dem erfindungsgemäßen Verfahren und der Einrichtung zur Durchführung des Verfahrens erstellten speziellen Automatentafel. Dabei kann die Anordnung so getroffen sein, daß auf dem Rechner oder Rechnersystem ein an dessen spezielle Hardware angepaßtes Automatenprogramm abläuft, das mit den in der Automatentafel abgelegten elementaren Zustandsübergangs- und Ergebnisfunktionen arbeitet oder aber dem Rechner/Rechnersystem kann die Automatentafel in kodierter Form über einen Compiler in für ihn abarbeitbarer Form zugeführt werden. Das Automatenprogramm erhält aus dem zu steuernden Prozeß Zustandmeldungen der Steuerungsobjekte sowie Eingaben als Eingabesymbole und es veranlaßt Ausgaben an die Steuerungsobjekte sowie Meldungen als Ausgabesymbole (Fig.1). Die jeweiligen Ausgaben und Meldungen werden durch die dem Automaten zugeführten Eingabesymbole sowie die jeweils erreichten internen Zwischenzuständen der Objekte nach Maßgabe der aus der Automatentafel aufgerufenen Zustandsübergangs- und Ergebnisfunktionen errechnet und überschreiben dann entweder bestimmte Zustandswerte im Zustandsvektor oder sie veranlassen die Ausgabe von Stellimpulsen für die Prozeßelemente.

Der Rechner bzw. das Rechnersystem des Automaten verfügt über Speicher zum Ablegen der Automatentafel und zum Verwalten der jeweils gültigen zustandswerte für alle vorkommenden Steuerungsobjekte. Die Zustandswerte der einzelnen Objekte werden in Form eines Datenvektors festgehalten und der Rechner bzw. das Rechnersystem überschreibt die jeweils aktuellen Zustandswerte beim Berechnen von Zustandsänderungen durch die jeweils sich ergebenden neuen Werte und verändert damit den Zustandsvektor.

Für jeden einem Objekt zugeordneten Folgezustandswert, der verschieden sein kann vom jeweiligen Ausgangszustandswert, ist eine eigene Zustandsübergangsfunktion zum Auffinden des jeweiligen Folgezustandes hinterlegt (Fig. 3). Jedes eine Zustandsänderung veranlassende Eingabesymbol verweist mindestens mittelbar auf das oder die jeweils zu ändernden Zustände eines Steuerungsobjektes sowie die in Frage kommenden Zustandsänderungsfunktionen. Aus diesem Grunde brauchen diese Änderungsfunktionen nur auf diejenigen Variablen des Datenvektor angewendet werden, die sich tatsächlich ändern; alle sich nicht ändernden Zustandswerte bleiben unverändert erhalten. Durch diese Maßnahme wird der zeitliche Aufwand für die Bestimmung der Folgezustände und Ergebnisse und auch der Aufwand für die Speicherung der Änderungsfunktionen gegenüber einer Ausbildung verringert, bei der sich die Änderungsfunktionen auf alle Variablen des betreffenden Objektes beziehen.

Entsprechend der Generierung der Automatentafel gibt es neben Zustandsübergangs- und Ergebnisfunktionen, auf die Eingabesymbole direkt hinweisen, weitere Zustandsübergangs- und Ergebnisfunktionen in der Automatentafel, deren Behandlungen allein vom Erreichen eines bestimmten inneren Zustandes der Steuerungsanlage als Ergebnis der Ausführung einer vorangegangenen Zustandsänderungsfunktion abhängen. Das Abarbeiten dieser vom inneren Zustand der Steuerungsanlage abhängigen Zustandsänderungsfunktionen erspart die vollständige eingabesymbolbezogene Beschreibung dieser Funktionen und die mehrfache Hinterlegung solcher Zustandsübergangsfunktionen, die im Rahmen einer Objektbehandlung mehrfach abgearbeitet werden können.

Bei der Steuerung eines Prozeßgeschehens kommt es häufig darauf an, daß bestimmte Zeitparameter eingehalten werden. So wird z. B. ein eingeleiteter Stellvorgang abgebrochen, wenn der Stellvorgang nicht innerhalb einer bestimmten Zeit abgeschlossen werden kann. Derartige zeitabhängige Schaltvorgänge sind über die Automatentafel nicht ohne weiteres anreizbar, weil die Automatentafel nur die Berechnung der jeweiligen Folgezustände eines Objektes beschreibt als Reaktion auf bestimmte Eingabesymbole oder innere Zustände. Um dennoch derartige zeitabhängige Vorgänge realisieren zu können, soll der Rechner bzw. das Rechnersystem oder eine besondere Hardware zum Berechnen zeitabhängiger Zustandsänderungen über Timer verfügen, die vom Automaten durch Ausgabe spezieller Ausgabesymbole individuell zu starten sind und deren Ablauf bewirkt, daß dem Automaten entsprechende Eingabesymbole zugeführt werden. Diese Maßnahme macht es möglich, auch zeitabhängige Steuervorgänge auszuführen, obgleich diese eigentlich im Programm der Automatentafel nicht vorgesehen sind.

Die Erfindung wurde vorstehend anhand eines sehr einfachen Ausführungsbeispieles der Eisenbahnsignaltechnik, nämlich dem Einzelumstellen einer Weiche, erläutert. Das Verfahren zum Erstellen der Änderungsfunktionen zum Abarbeiten von Fahrstraßenaufträgen geschieht in genau der gleichen Weise wie bei der Einzelumstellung einer Weiche, nur daß das Objekt, nämlich die jeweilige Fahrstraße, mehrere Einzelobjekte aufweist, die in der Beschreibung des Fahrstraßenobjektes hinterlegt sind und den Aufruf der jeweils zugehörigen Zustandsvariablen im Datenvektor bei der Behandlung der Fahrstraße ermöglichen. Für die Behandlung einer Fahrstraße gelten wiederum an das jeweilige Problem, nämlich die Fahrstraßenbehandlung angepaßte Sprachmittel der Fachsprache für das Stellwerksgeschehen.

Das relevante Sprachmittel "Zulassungsprüfung" für den Vorgang der Zulassungsprüfung im Rahmen der Fahrstraßenbildung würde als Transitionsbedingung auf Elementtypebene beinhalten: Für einen Pfad im Gleisplan von Start nach Ziel soll gelten: Alle Elemente der Fahrstraße sollen frei und nicht gesperrt sein (oder eine oder mehrere andere Bedingungen erfüllen, die durch die Betriebsordnung vorgegeben sind).

Für AllePfadObjekte (Objekt) Fahrweg,frei (Objekt) ∧ nicht geperrt(Objekt).

Der Ausdruck "für AllePfadObjekte" bindet die Variable "Objekt" = Fahrwegelement an jedes Objekt auf einem konkreten Fahrweg. Er wird als Quantor bezeichnet, weil er Bedingungen (hier: freiΛnicht gesperrt) an eine Gruppe von Objekten (Fahrwegelemente) bindet und damit diese Bedingungen quantifiziert. Quantoren stellen nichts anderes dar als kompakte Schreibweisen für immer wiederkehrende Ausdruckweisen, die leichter zu überblicken sind als die unabgekürzte Form ihrer elementaren Zustandswerte; sie bilden die Sprachmittel der Fachsprache, wobei ihr begifflicher Inhalt vorgegeben ist durch das zu beschreibende Prozeßgeschehen. Die expandierte Transitionenbedingung der Zulassungsprüfung einer konkreten Fahrstraße zwischen einem Startelement S21 und einem Zielelement S22 über die Fahrwegelemente WO4 und WO5 würde lauten:
frei(S21) ∧ nicht gesperrt (S21) ∧ frei(WO4) ∧ nicht
gesperrt (WO4) ∧ frei(WO5) ∧ nicht gesperrt(WO5) ∧ frei(S22) ∧ nicht qesperrt(WO5)** Folgezustand.

Die an der Fahrstraßenbildung konkret zu beteiligenden, über Quantoren anzusprechenden Fahrwegelemente S21, WO4, WO5, S22 ergeben sich aus der Anforderung einer ganz bestimmten Fahrstraße aus der Vielzahl der möglichen Fahrstraßen.

Es gibt auch Quantoren für die Bindung von Bedingungen an ganz bestimmte Objekte einer Vielzahl von Objekten, z. B. bei der Flankenschutzsuche. Dort soll das letzte Pfadobjekt auf einem Flankenschutzpfad Flankenschutz bieten. Der Quantor "Flankenschutz" beinhaltet
für LetztesPfadObjekt(Objekt,fls_Pfad,fls_bieten(Objekt)

Der Quantor bindet hier die Variable Objekt, für das die Bedingung fls_bieten(Objekt) = Flankenschutz bieten gilt, an das letzte Objekt auf dem Flankenschutzpfad fls_Pfad.

Das Expandieren und Codieren der konkreten Transitionsbedingungen beschieht wieder automatisch im Rechner, der die Automatentabelle erstellt, durch Einsetzen der jeweils relevanten elementaren Zustandswerte in die durch die Quantoren und die zugehörigen Eingabesymbole (Anfordern einer ganz bestimmten Fahrstraße) bezeichneten Transitionsbedingungen. Die zunächst verwendeten Sprachmittel sind damit ersetzt durch eine Folge von Zustanswerten, die vorhanden sein müssen, damit ein Folgezustand einer Fahrstraße erreicht werden kann. Hieraus werden Boole'sche Gleichungen gebildet und die sich daraus ergebenden Zustandsänderungsfunktionen werden nach Umsetzung in BDD's in der Automatentafel abgelegt.

Die Erfindung ist, obgleich beschrieben anhand von Ausführungsbeispielen der Eisenbahnsignaltechnik, mit Vorteil auch bei der Steuerung anderer vorzugsweise komplexer Prozeßgeschehen zu verwenden, beispielsweise zur Steuerung von Energieversorgungsanlagen oder zum Betrieb von Verkehrsleitsystemen. Dabei kommt es nicht darauf an, ob das Prozeßgeschehen durch nur einen oder durch mehrere Rechner gesteuert wird, die gemeinsam Zugriff haben auf eine gemeinsame Automatentafel oder getrennt zugreifen auf entsprechend ihrem Prozeßgeschehen angepaßte verteilte Automatentafelteile oder ob die steuernden Rechner einfach, redundant oder signaltechnisch sicher und ggf. redundant ausgeführt sind.

Ein ganz entscheidender Vorteil der Erfindung ist darin zu sehen, daß der Sicherheitsnachweis für die Richtigkeit der in der Automatentafel hinterlegten Zustandsübergangsfunktionen im wesentlichen nur in der Bewahrheitung der logischen Verknüpfung elementarer Zustandswerte in den Sprachmitteln der gewählten Fachsprache besteht. Wenn diese Bedingung erfüllt ist und die Projektierungsdaten fehlerfrei sind, ist auch die erstellte Automatentafel mit sehr großer Wahrscheinlichkeit fehlerfrei, weil die Umsetzung in die elementaren Zustandswerte der einzelnen Objekte der Steuerungsanlage und die Bestimmung der Änderungsfunktionen durch einen Rechner unabhängig von der Sorgfalt eines Menschen geschieht. Bei etwaigen Änderungen der Außenanlage bedarf es keines neuen Sicherheitsnachweises, weil sich an den dem Sicherheitsnachweis zu unterziehenden Gesetzmäßigkeiten nichts geändert hat. Es muß lediglich eine neue Automatentafel erstellt werden, in der das erfindungsgemäße Verfahren unter Verwendung geänderter Projektierungsdaten nochmals angewendet wird.

Unterschiedliche Anwender, z. B. verschiedene Bahnverwaltungen, stellen ggf. unterschiedliche Anforderungen an die Prozeßsteuerung. Das führt zu unterschiedlichen Sprachmitteln für unterschiedliche Anwender oder aber dazu, daß für unterschiedliche Anwender diese Sprachmittel zwar gleich sind, aber unterschiedliche logische Gesetzmäßigkeiten beinhalten. Sind Sicherheitsnachweise zu erbringen, so sind sie auf alle Sprachmittel der verwendeten Fachsprache anzuwenden.

Die in den ausführenden Rechnern zur Anwendung kommenden Automatentafeln sind verschieden in Abhängigkeit von der jeweils zur Anwendung kommenden Betriebsordnung und den Projektierungsdaten der jeweils zu steuernden Anlage; sie sind prinzipiell unabhängig von der hardware der verwendeten Rechner, können aber Zwicks Optimierung an diese angepaßt werden. Das Automatenprogramm zur Abarbeitung der Automatentafel ist von der zur Ausführung verwendeten hardware abhängig, aber für alle Anwender und alle Anwendungen gleich. Es muß nur dann geändert werden, wenn sich die Technologie der ausführenden Rechner ändert, weil z. B. andere Prozessoren zur Realisierung des Schaltwerkes verwendet werden.

## Patentansprüche

1. Verfahren zum Erstellen der anwendungsabhängigen, hard- und software-unabhängigen Logik eines freiprogrammierbaren Schaltwerkes zur Abarbeitung eines Prozeßgeschehens nach dem Prinzip des endlichen Automaten für komplexe SteuerungsSysteme mit entsprechend umfangreichen Ausgangs- und Folgezuständen,
**gekennzeichnet durch**
die folgenden Verfahrensschritte
a) Beschreiben aller möglichen (nicht veränderbaren) Merkmals- und (veränderbaren) Zustandswerte der physikalisch (gegenständlich) oder logisch (virtuell) existierenden Steuerungsobjekttypen (= Beschreibung von Objekten auf Typebene; Zusammenfassung aller Individualobjekte mit gleichen Eigenschaften, z. B. "Weiche") des Steuerungssystems;
b) Beschreiben der konkreten Steuerungsanlage des Systems durch Benennen ihrer Steuerungsobjekte (= Individualobjekte, z. B. "Weiche 1, Weiche 2"), durch Zuordnung der Objekte zu jeweils einem der beschriebenen Steuerungsobjekttypen und durch Benennen der durch Projektierungsangaben vorgegebenen konkreten Merkmalswerte sowie Ermitteln des Zustands raumes des Automaten aus der vorliegenden Beschreibung;
c) Beschreiben des Prozeßgeschehens durch eine Vielzahl von Einzelvorgängen des Zustandsübergangs- und Ergebnisverhaltens auf Objekttypebene in einer anwendungsorientierten Fachsprache, deren Sprachmittel die Bedingungen für das Erreichen eines jeweiligen Folgezustandes oder eines Ergebnisses als logische Verknüpfungen elementarer Zustandswerte und/oder Projektierungsdaten beinhalten;
d) Anwenden der den Objekttypen zugeordneten Beschreibungen gemäß c) auf die Objekte der Steuerungsanlage durch Ersetzen der auf die Objekttypen bezogenen Sprachmittel durch entsprechende objektbezogene Sprachmittel und durch Ersetzen der logischen Verknüpfungs-Merkmale der objektbezogenen Sprachmittel durch die tatsächlichen Zustandswerte und die Projektierungsdaten;
e) Aufstellen eines logischen Gleichungssystems für das Übergangs- und Ergebnisverhalten der einzelnen Objekte und Darstellen dieser Gleichungen in einer kompakten Form;
f) Ermitteln der anwendungsabhängigen Automatentafel in Form der elementaren Zustandsübergangs- und Ergebnisfunktionen aller Steuerungsobjekte aus den jeweiligen Eingabesymbolen (Bedienungen, Meldungen), den gegenwärtigen und den Folgezustandswerten bzw. Ergebnissen der Objekte in der gewählten kompakten Darstellungsform.

2. Verfahren nach Anspruch 1,
**gekennzeichnet durch** die folgenden Verfahrensschritte
a) Beschreiben der möglichen Zustandswerte eines Steuerungsobjekttyps als eine Aufzählung von Alternativen, von denen zu jedem Zeitpunkt für jedes Objekt dieses Typs genau eine zutrifft;
b) Beschreiben der Gesetzmäßigkeiten für die Zustandswechsel eines Steuerungsobjekttyps und für das Ergebnisverhalten durch eine Aufzählung von Regeln, in denen jeweils festgelegt ist, unter welchen Bedingungen (Meldungen, Eingaben und definierten Zustandswerten) konkrete Steuerungsobjekte dieses Typs ihren Zustand wechseln und welche Steuerinformationen in diesem Fall dem Prozeß zuzuführen sind.

3. Verfahren nach Anspruch 1 oder 2,
**dadurch gekennzeichnet,**
daß erste logische Gesetzmäßigkeiten für das Zustandsübergangs- und Ergebnisverhalten der Objekttypen eingabe- und meldungsorientiert formuliert werden und daß weitere logische Gesetzmäßigkeiten für das Zustandsübergangs- und Ergebnisverhalten der Objekttypen formuliert werden, deren Ausführung allein abhängig ist vom jeweils erreichten internen Zustand der Steuerungsanlage als Ergebnis der Ausführung einer vorangegangenen Zustandsübergangsfunktion.

4. Verfahren nach Anspruch 1,
**dadurch gekennzeichnet,**
daß als kompakte Darstellungsform der logischen Gleichungen die Darstellung in Binary Decision Diagrams gewählt ist.

5. Verfahren nach Anspruch 1 oder 4,
**dadurch gekennzeichnet,**
daß die Automatentafel aus der für die Generierung gewählten logischen Darstellungsform in eine für die Abarbeitung der Automatentafel in einen Rechner oder Rechnersystem optimierten Form umgesetzt wird.

6. Verfahren nach einem der Ansprüche 1 bis 5,
**dadurch gekennzeichnet,**
daß für den Fall, daß das Gleichungssystem für die Bestimmung der elementaren Zustandsübergangs- und Ergebnisfunktionen (fehlerbedingt) sich widersprechende Bedingungen beinhaltet und daher nicht lösbar ist, die weitere Bearbeitung abgebrochen wird.

7. Verfahren nach Anspruch 6,
**dadurch gekennzeichnet,**
daß der/die Rechner die Bedingungen, die zum Abbruch der Ermittlung der elementaren Zustandsübergangs- und Ergebnisfunktionen geführt haben, zur Fehleranalyse gespeichert werden.

8. Einrichtung zum Erstellen der anwendungsabhängigen, hard- und software-unabhängigen Logik eines freiprogrammierbaren Schaltwerkes zur Abarbeitung eines Prozeßgeschehens nach dem Prinzip des endlichen Automaten, für große Steuerungssysteme mit entsprechend umfangreichen Ausgangs- und Folgezuständen,
**dadurch gekennzeichnet**,
daß ein Rechner oder Rechnersystem vorgesehen ist, in dessen Speichern neben den möglichen (nicht veränderbaren) Merkmals- und (veränderbaren) Zustandswerten der physikalisch (gegenständlich) oder logisch (virtuell) existierenden Steuerungsobjekttypen (= Beschreibung von Objekten auf Typebene; Zusammenfassung aller Individualobjekte mit gleichen Eigenschaften, z. B. "Weiche") des Steuerungssystems auch die konkrete Steuerungsanlage des Systems in Gestalt ihrer Steuerungsobjekte (= Individualobjekte, z. B. "Weichel, Weiche 2") hinterlegt ist, wobei für die Steuerungsobjekte jeweils festgehalten ist, welchem Steuerungsobjekttyp sie angehören, welche durch Projektierungsangaben vorgegebene Merkmalswerte und welche aus der Beschreibung des Systems entnehmbaren Zustandswerte ihnen zu eigen sind,
daß für den Rechner oder das Rechnersystem das Zustandsübergangs- und Ergebnisverhalten der Objekttypen in einer anwendungsorientierten Fachsprache hinterlegt ist, aus dem der Rechner oder das Rechnersystem durch Anwendung dieser Sprachmittel auf die zugehörigen Steuerungsobjekte objektbezogene Sprachmittel bildet und anschließend deren logische Verknüpfungs-Merkmale durch die hinterlegten tatsächlichen Zustandswerte und die Projektierungsdaten ersetzt,
daß der Rechner oder das Rechnersystem ein logisches Gleichungssystem für das übergangs- und Ergebnisverhalten der einzelnen Objekte aufstellt und dieses in einer kompakten Form darstellt
und daß der Rechner oder das Rechnersystem eine anwendungsabhängige Automatentafel in Form der elementaren Zustandsübergangs- und Ergebnisfunktionen aller Steuerungsobjekte als Lösung des logischen Gleichungssystems in der gewählten kompakten Darstellungsform ermittelt und für die spätere Abarbeitung des Prozeßgeschehens abspeichert.

9. Einrichtung nach Anspruch 8,
**dadurch gekennzeichnet,**
daß für jeden einem Objekt zugeordneten Folgezustandswert, der verschieden sein kann vom jeweiligen Ausgangszustandswert, eine eigene Zustandsübergangsfunktion zum Auffinden des jeweiligen Folgezustandes hinterlegt ist und daß das eine Zustandsänderung veranlassende Eingabesymbol mindestens mittelbar auf das oder die jeweils zu verändernden Zustände eines Steuerungsobjektes und die in Frage kommenden Zustandsänderungsfunktion hinweist.

10. Einrichtung nach Anspruch 9,
**dadurch gekennzeichnet,**
daß in der Automatentafel neben den Zustandsübergangsfunktionen, auf die Eingabesymbole hinweisen, weitere Zustandsübergangs- und Eingabefunktionen hinterlegt sind, deren Behandlung allein vom Erreichen eines bestimmten internen Zustandes des Steuerungsobjektes als Ergebnis der Ausführung einer vorangegangenen Zustandsänderungsfunktion abhängt und daß diese Funktionen so lange zur Anwendung kommen bis sich kein neuer Folgezustand bzw. keine Ausgabe des Gesamtsystems einstellt.

11. Einrichtung zur Steuerung eines Prozeßgeschehens unter Verwendung einer Automatentafel, die gemäß Anspruch 8 durch einen Rechner oder ein Rechnersystem als Lösung eines logischen Gleichungssystems für das übergangs- und Ergebnisverhalten der Steuerungsobjekte des Steuerungssystems in einer kompakten Darstellungsform erstellt wurde, wobei das übergangs- und Ergebnisverhalten der Steuerungsobjekte durch die Verknüpfungsmerkmale objektbezogener Sprachmittel und die Zustände und Merkmale der Steuerungsobjekte definiert sind und die objektbezogenen Sprachmittel vom Rechner/Rechnersystem durch Anwendung von auf Objekttypebene bezogenen anwendungsorientierten Sprachmitteln auf die Steuerungsobjekte bestimmt werden
**dadurch gekennzeichnet,**
a) auf einem Rechner oder Rechnersystem läuft ein an seine spezielle Hardware angepaßtes Automatenprogramm, das mit den in einer Automatentafel abgelegten Zustandsübergangsund Ergebnisfunktionen arbeitet oder dem Rechner/Rechnersystem wird eine Automatentafel in kodierter Form über einen Compiler in für ihn abarbeitbarer Form zugeführt.
b) Das Automatenprogramm erhält aus dem zu steuernden Prozeß Zustandsmeldungen der Steuerungsobjekte sowie Eingaben als Eingabesymbole und veranlaßt Ausgaben an die Steuerungsobjekte sowie Meldungen als Ausgabesymbole.

12. Einrichtung nach Anspruch 11,
**dadurch gekennzeichnet,**
daß der Rechner/das Rechnersystem über Speicher zum Ablegen der Automatentafel und zum Verwalten der jeweils gültigen Zustandswerte für alle physikalisch und logisch existierenden Steuerungsobjekte verfügt.

13. Einrichtung nach Anspruch 11,
**dadurch gekennzeichnet,**
daß im Rechner/Rechnersystem die von den einzelnen Objekten tatsächlich eingenommenen Zustandswerte in Form eines Datenvektors festgehalten sind und daß der Rechner/das Rechnersystem nach Berechnen einer Zustandsänderung den oder die sich nach Maßgabe der jeweils zur Anwendung kommenden Zustandsänderungsfunktion ändernden Zustandswerte im Datenvektor mit dem oder den neuen Werten überschreibt.

14. Einrichtung nach einem der Ansprüche 11 bis 13,
**dadurch gekennzeichnet,**
daß der Rechner/das Rechnersystem oder eine gesonderte Hardware zum Berechnen zeitabhängiger Zustandsänderungen über Timer verfügt, die durch Ausgabe spezieller Ausgabesymbole individuell zu starten sind und deren Ablauf bewirkt, daß dem Rechner/Rechnersystem entsprechende Eingabesymbole zugeführt werden.

## Claims

1. Process for generating the application-dependent, hardware-independent and softwareindependent logic of a freely programmable sequential circuit for processing a process action according to the principle of the finite automatic machine for complex control systems with correspondingly extensive initial states and follow-up states,
**characterised by** the following process steps:
a) describing all of the possible (unalterable) feature values and (alterable) state values of the control object types (= description of objects at the level of type; summary of all of the individual objects having the same characteristics, for example "switch point") of the control system which exist physically (in concrete form) or logically (in virtual form);
b) describing the concrete control installation of the system by naming its control objects (= individual objects, for example "switch point 1, switch point 2"), by assigning the objects to one of the control object types described in each case and by naming the concrete feature values pre-selected by project planning information, and by determining the state space of the automatic machine from the existing description;
c) describing the process action by means of a large number of individual operations of the state transition and result performance at the level of object type in an application-oriented technical language whose language resources comprise the conditions for reaching a respective follow-up state or a result, as the logical linkages of elementary state values and/or project planning data;
d) applying the descriptions assigned to the object types in accordance with c) to the objects of the control installation by replacing the language resources referring to the object types with suitable object-specific language resources and by replacing the logic features of the object-specific language resources with the actual state values and the project-planning data;
e) drawing up a set of logic equations for the transition and result performance of the individual objects and representing these equations in a compact form;
f) determining the application-dependent automatic machine table in the form of the elementary state transition and result functions of all the control objects from the respective input symbols (operations, signals) and from the respective present and follow-up state values and results of the objects in the compact form of representation chosen.

2. Process according to claim 1,
**characterised by** the following process steps:
a) describing the possible state values of a control object type in the form of a listing of alternatives, just one of which holds true at each point in time for each object of this type;
b) describing the mathematical interrelationships for the state change of a control object type and for the result performance, by means of a listing of rules in which the conditions (signals, inputs and defined state values) under which concrete control objects of this type change their state, and the control information which must be supplied to the process in this case, are respectively established.

3. Process according to claim 1 or 2,
**characterised in that** first logical mathematical interrelationships are formulated in an input-oriented and signal-oriented manner for the state transition and result performance of the object types, and
in that further logical mathematical interrelationships are formulated for the state transition and result performance of the object types whose execution is solely dependent upon the respective internal state reached by the control installation as a result of the execution of a preceding state transition function.

4. Process according to claim 1,
**characterised in that** representation in binary decision diagrams is selected as the compact form of representation of the logic equations.

5. Process according to claim 1 or 4,
**characterised in that** the automatic machine table is converted from the logical form of representation selected for generating, into an optimised form for processing the automatic machine table in a computer or computer system.

6. Process according to one of claims 1 to 5,
**characterised in that**, in the case where the set of equations for determining the elementary state transition and result functions contains conflicting conditions (caused by error) and cannot therefore be solved, further processing is broken off.

7. Process according to claim 6,
**characterised in that**, for error analysis, the computer or computers store the conditions which have led to the break-off of the determining of the elementary state transition and result functions.

8. Device for generating the application-dependent, hardware-independent and software-independent logic of a freely programmable sequential circuit for processing a process action according to the principle of the finite automatic machine for large control systems with correspondingly extensive initial states and follow-up states,
**characterised in that** there is provided a computer or computer system in whose memories, in addition to the possible (unalterable) feature values and (alterable) state values of the control object types (= description of objects at the level of type; summary of all of the individual objects having the same characteristics, for example "switch point") of the control system which exist physically (in concrete form) or logically (in virtual form), there is also stored the concrete control installation of the system in the shape of its control objects (= individual objects, for example "switch point 1, switch point 2"), there being retained, for the respective control objects, the control object type to which they belong, the feature values pre-selected by means of project planning information which are for them, and the state values derivable from the description of the system which are for them,
in that, for the computer or computer system, the state transition and result performance of the object types is stored in an application-oriented technical language from which, by applying these language resources to the associated control objects, the computer or computer system forms object-specific language resources and subsequently replaces their logic features with the stored actual state values and the project planning data,
in that the computer or computer system draws up a set of logic equations for the transition and result performance of the individual objects and represents this in a compact form, and
in that the computer or computer system determines an application-dependent automatic machine table in the form of the elementary state transition and result functions of all of the control objects as a solution of the set of logic equations in the compact representational form chosen, and stores it for subsequent processing of the process action.

9. Device according to claim 8,
**characterised in that**, for each follow-up state value which is assigned to an object and which can differ from the respective initial state value, there is stored a separate state transition function for finding the respective follow-up state, and
in that the input symbol causing a state change refers at least indirectly to the respective state or states of a control object that is or are to be altered and to the state change function in question.

10. Device according to claim 9,
**characterised in that**, in the automatic machine table, in addition to the state transition functions referred to by input symbols, there are stored further state transition and input functions whose treatment depends solely upon a specified internal state of the control object being reached as a result of the execution of a preceding state change function, and
in that these functions are applied until there ensues no new follow-up state and no output of the entire system.

11. Device for controlling a process action using an automatic machine table which, according to claim 8, has been generated in a compact form of representation by a computer or computer system as the solution of a set of logic equations for the transition and result performance of the control objects of the control system, wherein the transition and result performance of the control objects is defined by the logic features of object-specific language resources and by the states and features of the control objects, and the object-specific language resources are determined for the control objects by the computer/computer system by using application-oriented language resources referring to the object type level,
**characterised in that**
a) on a computer or computer system, there runs an automatic machine program which is adapted to the special hardware thereof and which operates with the state transition and result functions stored in an automatic machine table, or an automatic machine table in a coded form is supplied to the computer/computer system by way of a compiler in a form that can be processed by it.
b) From the process to be controlled, the automatic machine program obtains state signals of the control objects as well as inputs in the form of input symbols, and initiates outputs to the control objects as well as signals in the form of output symbols.

12. Device according to claim 11,
**characterised in that** the computer/computer system is provided with memories for storing the automatic machine table and for managing the respective valid state values for all of the control objects having a physical and a logical existence.

13. Device according to claim 11,
**characterised in that** the state values actually taken from the individual objects are retained in the form of a data vector in the computer/computer system, and
in that, after calculating a state change, the computer/computer system overwrites with the new value or values the state value or values in the data vector which change in accordance with the respectively applied state change function.

14. Device according to one of claims 11 to 13,
**characterised in that** the computer/computer system or separate hardware is provided with timers for calculating time-dependent state changes, which timers can be started individually by the delivery of special output symbols, and whose expiry causes appropriate input symbols to be supplied to the computer/computer system.

## Revendications

1. Procédé d'établissement d'une logique, dépendant de l'application et indépendante du matériel et du logiciel, d'un mécanisme de commutation librement programmable, servant à traiter une réalisation de processus suivant le principe de l'automate fini, pour des systèmes de commande complexes ayant des états de départ et des états suivants qui sont en conséquence nombreux,
caractérisé par les étapes opératoires suivantes
a) on décrit toutes les valeurs possibles de caractéristiques (qui ne peuvent pas être modifiées) et d'états (qui peuvent être modifiés) des types d'objets de commande du système de commande, qui existent physiquement (réellement) ou logiquement (virtuellement) (= description d'objets au niveau des types; réunion de tous les objets individuels ayant des propriétés identiques, par exemple "aiguillage");
b) on décrit l'installation concrète de commande du système en dénommant ses objets de commande (= objets individuels, par exemple "aiguillage 1, aiguillage 2"), en associant les objets chacun à un des types d'objet décrit et en dénommant les valeurs de caractéristiques concrètes, prescrites par des données de projection, et on détermine l'espace d'états de l'automate à partir de la présente description;
c) on décrit la réalisation du processus par une multiplicité d'opérations individuelles du comportement de transition d'état et de résultat au niveau des types d'objet dans un langage spécialisé qui est orienté application et dont les moyens de langage contiennent, sous forme de combinaisons logiques de valeurs élémentaires de valeurs d'état et/ou de données de projet, les conditions d'obtention d'un état suivant associé ou d'un résultat;
d) on applique les descriptions suivant c), associés aux types d'objet, aux objets de l'installation de commande en remplaçant les moyens de langage qui sont relatifs aux types d'objet par des moyens de langage correspondants rapportés à l'objet et en remplaçant les caractéristiques logiques de combinaison des moyens de langage orientés objets par les valeurs réelles d'état et les données de projet;
e) on établit un système logique d'équations pour le fonctionnement de transition et de résultat des objets individuels et on représente ces équations sous une forme compacte;
f) on détermine le tableau automatique dépendant de l'application sous la forme des fonctions élémentaires de transition d'état et de résultat de tous les objets de commande, à partir des symboles associés d'entrée (manoeuvres, messages), des valeurs d'états présents et suivants et des résultats des objets, dans la forme de représentation compacte choisie.

2. Procédé suivant la revendication 1,
caractérisé par les étapes opératoires suivantes
a) on décrit les valeurs possibles d'état d'un type d'objet de commande sous la forme d'une énumération d'alternatives dont, pour chaque objet de ce type, une exactement est juste à chaque instant;
b) on décrit les conformités prévues pour le changement d'état d'un type d'objet de commande et pour le comportement de résultat par une énumération de règles dans lesquelles il est fixé les conditions (messages, entrées et valeurs d'état définies) dans lesquelles des objets concrets de commande de ce type changent leur état et les informations de commande qui sont à envoyer dans ce cas au processus.

3. Procédé suivant la revendication 1 ou 2,
caractérisé en ce que
l'on formule de manière orientée entrées et orientée messages des premières conformités logiques pour le comportement de transition d'état et de résultat des types d'objet et en ce que l'on formule, pour le comportement de transition d'état et de résultat des types d'objet, d'autres conformités logiques dont la réalisation ne dépend que de l'état interne atteint de l'installation de commande en tant que résultat de la réalisation d'une fonction de transition d'état précédente.

4. Procédé suivant la revendication 1,
caractérisé en ce que
l'on choisit comme forme compacte de représentation des équations logiques la représentation en Binary Decision Diagrams.

5. Procédé suivant la revendication 1 ou 4,
caractérisé en ce que
l'on convertit le tableau automatique de la forme logique de représentation choisie pour la génération en une forme optimisée pour le traitement du tableau automatique dans un ordinateur ou dans un système d'ordinateurs.

6. Procédé suivant l'une des revendications 1 à 5,
caractérisé en ce que,
dans le cas où le système d'équations destiné à la détermination des fonctions élémentaires de transition d'état et de résultat contient (en raison d'erreurs) des conditions contradictoires et ne peut donc pas être résolu, on interrompt la suite du traitement.

7. Procédé suivant la revendication 6,
caractérisé en ce que
l'on mémorise dans l'ordinateur ou dans les ordinateurs, pour l'analyse d'erreur, les conditions qui ont provoqué l'interruption de la détermination des fonctions élémentaires de transition d'état et de résultat.

8. Dispositif d'établissement de la logique, dépendant de l'application et indépendante du matériel et du logiciel, d'un mécanisme de commutation librement programmable, servant à traiter une réalisation de processus suivant le principe de l'automate fini, pour des systèmes de commande complexes ayant des états de départ et des états suivants qui sont en conséquence nombreux,
caractérisé en ce que
il est prévu un ordinateur ou un système d'ordinateurs dans les mémoires duquel sont mémorisés, en plus des valeurs possibles de caractéristiques (qui ne peuvent pas être modifiées) et de valeurs d'états (qui peuvent être modifiés) des types d'objets de commande du système de commande existant physiquement (réellement) ou logiquement (virtuellement) (= description d'objets au niveau des types; réunion de tous les objets individuels ayant des propriétés identiques, par exemple "aiguillage"), aussi l'installation concrète de commande du système sous la forme de ses objets de commande (= objets individuels, par exemple "aiguillage 1, aiguillage 2"), le type d'objet de commande auxquels chacun des objets de commande est associé, les valeurs de caractéristiques prescrites par les données de projet et les valeurs d'état qui peuvent ressortir de la description du système et qui leur sont propres, étant consignés pour les objets de commande, en ce que,
pour l'ordinateur ou le système d'ordinateurs, il est mis en mémoire dans un langage spécialisé, orienté application, le comportement de transition d'état et de résultat des types d'objet à partir duquel l'ordinateur ou le système d'ordinateurs, en appliquant ces moyens de langage aux objets associés de commande, forme des moyens de langage orientés objet et, ensuite, remplace leurs caractéristiques logiques de combinaison par les valeurs d'état réellement mises en mémoire et par les données de projection,
en ce que l'ordinateur ou le système d'ordinateurs établit un système logique d'équations pour le comportement de transition d'état et de résultat des objets individuels et le représente sous forme compacte,
et en ce que l'ordinateur ou le système d'ordinateurs détermine, comme solution du système logique d'équations, dans la forme compacte de représentation choisie, un tableau automatique, dépendant de l'utilisation, sous la forme des fonctions élémentaires de transition d'état et de résultat de tous les objets de commande et le met en mémoire pour le traitement ultérieur de la réalisation du processus.

9. Dispositif suivant la revendication 8,
caractérisé en ce que,
pour chaque valeur d'état suivant qui est associée à un objet et qui peut être différente de la valeur associée d'état de départ, il est mis en mémoire une fonction propre de transition d'état servant à détecter l'état suivant associé et en ce que le symbole d'entrée qui provoque un changement d'état renvoie au moins indirectement à l'état ou aux états à changer d'un objet de commande et à la fonction de changement d'état concernée.

10. Dispositif suivant la revendication 9,
caractérisé en ce que
il est mis en mémoire dans le tableau automatique, en plus des fonctions de transition d'état auxquelles renvoient les symboles d'entrée, d'autres fonctions de transition d'état et d'entrée, dont le traitement ne dépend que de l'obtention d'un état interne déterminé de l'objet de commande comme résultat de la réalisation d'une fonction précédente de changement d'état, et en ce que ces fonctions sont utilisées jusqu'à ce qu'il ne s'établisse plus de nouvel état suivant ni de sortie du système global.

11. Dispositif de commande d'une réalisation d'un processus avec utilisation d'un tableau automatique qui, suivant la revendication 8, a été établi sous une forme compacte de représentation par un ordinateur ou un système d'ordinateurs comme solution d'un système logique d'équation pour le comportement de transition et de résultat des objets de commande du système de commande, le comportement de transition et de résultat des objets de commande étant défini par les caractéristiques de combinaison de moyens de langage rapportés aux objets et par les états et les caractéristiques des objets de commande et les moyens de langage rapportés aux objets étant déterminés par l'ordinateur ou le système d'ordinateurs en appliquant aux objets de commande des moyens de langage orientés application, se rapportant au niveau de type d'objet,
caractérisé en ce que
a) il se déroule sur un ordinateur ou un système d'ordinateurs un programme automatique qui est adapté à son logiciel spécial, qui travaille avec les fonctions de transition d'état et de résultat mémorisées dans un tableau automatique ou bien il est envoyé sous forme codée un tableau automatique à l'ordinateur ou au système d'ordinateurs, par l'intermédiaire d'un compilateur, sous une forme qu'il peut traiter,
b) le programme automatique reçoit du processus à commander des messages d'état des objets de commande ainsi que des entrées sous forme de symboles d'entrée et provoque des sorties adressées aux objets de commande ainsi que des messages servant de symboles de sortie.

12. Dispositif suivant la revendication 11,
caractérisé en ce que
l'ordinateur ou le système d'ordinateurs dispose de mémoire pour mettre en mémoires le tableau automatique et pour gérer les valeurs d'état valables de tous les objets de commande existant physiquement et logiquement.

13. Dispositif suivant la revendication 11,
caractérisé en ce que
il est consigné dans l'ordinateur ou le système d'ordinateurs, sous la forme d'un vecteur de données, les valeurs d'état prises réellement par les objets individuels et en ce que l'ordinateur ou le système d'ordinateurs, après le calcul d'un changement d'état, écrit la nouvelle valeur ou les nouvelles valeurs à la place de la valeur ou des valeurs d'état du vecteur de données qui changent suivant la donnée de la fonction de changement d'état que l'on utilise.

14. Dispositif suivant l'une des revendication 11 à 13,
caractérisé en ce que
l'ordinateur ou le système d'ordinateurs, ou un matériel séparé servant à calculer des changements d'état dépendant du temps, dispose d'horloges qui sont à mettre en action individuellement par la sortie de symboles spéciaux de sortie et dont le déroulement provoque l'envoi de symboles d'entrée correspondants à l'ordinateur ou au système d'ordinateurs.
